# EUROPÄISCHE PATENTANMELDUNG

(11) **EP 0 671 234 A1**
(43) Veröffentlichungstag der Anmeldung: **13.09.1995**
(21) Anmeldenummer: 95102131.0
(22) Anmeldetag: 16.02.1995
(51) Int. Cl.: B23D 53/04, B27B 27/04, B27B 27/06

(54) **Gehrungsbandsägemaschine**

(30) Priorität: 11.03.1994 DE 9404099 U
(71) Anmelder: WEGENER GmbH, D-52074 Aachen (DE)
(72) Erfinder: Weissfloch, Reinhard, Dr.-Ing., D-52074 Aachen (DE)
(74) Vertreter: Paul, Dieter-Alfred, Dipl.-Ing.

(57) **Zusammenfassung**

Eine Sägemaschine zum Sägen von Werkstücken weist ein Maschinengestell, das eine Werkstückauflage hat, und eine Bandsäge auf,die eine Schnittebene definiert und am Maschinengestell um eine Schwenkachse drehbar gelagert ist, wobei die Schwenkachse derart orientiert ist, daß durch Verschwenken der Bandsäge der Winkel der Schnittebene zur Längsachse der Werkstückauflage einstellbar ist. Damit Werkstücke mit schrägem Abschluß genauer reproduzierbar hergestellt werden können, erstreckt sich die Schwenkachse (49) in der Schnittebene und sind Werkstückauflage (21, 22, 25, 26) und Schwenkachse (49) derart zueinander angeordnet oder wenigstens teilweise ausrichtbar, daß die Schwenkachse (49) eine seitliche Begrenzung des in der Werkstückauflage (21, 22, 25, 26) befindlichen Werkstücks (48, 75, 85) tangiert.

## Beschreibung

Die Erfindung betrifft eine Sägemaschine zum Sägen von Werkstücken, insbesondere von Kunststoffrohren mit einem Maschinengestell, das eine Werkstückauflage hat, und einer Bandsäge, die eine Schnittebene definiert und am Maschinengestell um eine Schwenkachse drehbar gelagert ist, wobei die Schwenkachse derart orientiert ist, daß durch Verschwenken der Bandsäge der Winkel der Schnittebene zur Längsachse der Werkstückauflage einstellbar ist.

Sägemaschinen der vorgenannten Art haben ein Maschinengestell mit einer Werkstückauflage, auf der ein Werkstück beispielsweise in Form eines Rohres in seiner Lage fixiert werden kann. Die Werkstückauflage erstreckt sich in ihrer Längsausrichtung horizontal. Der Werkstückauflage zugeordnet ist eine Bandsäge mit einem umlaufenden Sägeband. Das Sägeband ist zwischen zwei oder mehr Umlenkrollen gespannt, von denen eine angetrieben ist. Die Bandsäge ist auf einem Gestell um eine horizontale Achse schwenkbar gelagert. Auf diese Weise kann sie in Richtung auf die Werkstückauflage bewegt werden, wodurch eine vertikale Schnittebene entsteht, das Werkstück also senkrecht durchtrennt wird.

Die Bandsäge ist mit ihrer horizontalen Schwenkachse auf einem Gestell gelagert, das mit der Bandsäge um eine vertikale Schwenkachse verdrehbar ist. Dies ermöglicht es, das Werkstück im Winkel zur Längsachse der Werkstückauflage, d. h. schräg durchzutrennen. Der jeweils benötigte Winkel läßt sich einstellen.

Bei bisher bekannten Sägemaschinen war es schwierig und zeitraubend, Rohrstücke mit beidseits schrägem Schnitt reproduzierbar herzustellen, insbesondere wenn Forderungen nach einem bestimmten Längenmaß entweder der kürzesten oder der längsten Mantellinie bestanden. Entsprechende Schwierigkeiten bereitete auch die Herstellung von gepfeilten Rohrenden mit zwei in einem bestimmten Winkel zueinander stehenden Endebenen, wie sie für die Herstellung von Rohrabzweigungen erforderlich sind. Dabei liegt die Schnittlinie der beiden Endebenen gewöhnlich auf einem Rohrdurchmesser.

Der Erfindung liegt deshalb die Aufgabe zugrunde, eine Sägemaschine der eingangs genannten Art so auszubilden, daß Werkstücke mit schrägem Abschluß genauer reproduzierbar hergestellt werden können.

Diese Aufgabe wird erfindungsgemäß dadurch gelöst, daß sich die Schwenkachse zur Verstellung des Winkels der Schnittebene in der Schnittebene erstreckt und daß Werkstückauflage und Schwenkachse derart zueinander angeordnet oder ausrichtbar sind, daß die Schwenkachse eine seitliche Begrenzung des in der Werkstückauflage befindlichen Werkstücks tangiert.

Der Grundgedanke der Erfindung besteht in einer besonderen Anordnung der Schwenkachse für die Bandsäge in Bezug auf die Schnittebene und in Bezug auf eine seitliche Begrenzung des in der Werkstückauflage befindlichen Werkstücks. Wenn die Schwenkachse in der vorerwähnten Art orientiert ist, läßt sich auf einfache Weise die Längserstreckung eines Werkstücks auf einer vorgegebenen Seite abmessen und einstellen. Die Schnittebenen können durch einen von außen sichtbaren Punkt gelegt werden. Auf diese Weise lassen sich Werkstücke mit einem schrägen Abschluß an einer und auch an beiden Enden schnell und reproduzierbar herstellen.

Die Werkstückauflage selbst kann zwei im Winkel, vorzugsweise im rechten Winkel zueinander stehende Auflageebenen haben, und zwar bevorzugt eine horizontale und eine vertikale Auflageebene. Ein einfacher Aufbau der Sägemaschine ergibt sich dann, wenn die Schwenkachse vertikal orientiert ist.

Sollen mit der erfindungsgemäßen Sägemaschine lediglich Einfach-Schrägabschlüsse hergestellt werden, reicht es aus, daß die Werkstückauflage in Bezug auf die Schwenkachse ortsfest ist und auch keine verstellbaren Teile hat. Mit einer solchen Sägemaschine können auch gepfeilte Rohrenden hergestellt werden. Für diese Art der Herstellung ist es jedoch vorteilhafter, wenn an der Werkstückauflage Verstellmaßnahmen getroffen werden können, weil sich hierdurch eine präzisere Ausrichtung des Werkstücks erzielen läßt. Dies kann beispielsweise durch Längsverstellung der Werkstückauflage geschehen. Als zweckmäßiger hat sich jedoch eine Verstellung quer zur Schnittebene erwiesen, mit deren Hilfe die Achse des Werkstücks in dieser Richtung verlegt werden kann. Dies kann beispielsweise dadurch geschehen, daß die gesamte Werkstückauflage vorzugsweise senkrecht zur Schwenkachse verstellbar gestaltet wird. Alternativ dazu kann vorgesehen sein, daß eine der Auflageebenen der Werkstückauflage quer zur Schnittebene, zweckmäßiger senkrecht zur Schwenkachse verstellbar ist. Dabei bietet es sich an, daß die vertikale Auflageebene diejenige ist, die verstellbar ist.

Die vorbeschriebene Verstellbarkeit ermöglicht es, an den Verstellelementen eines Skalierung für verschiedene Rohrdurchmesser vorzunehmen, um eine präzise Positionierung des Rohres zu ermöglichen und die gewünschte Schnittposition zu gewährleisten. Für die reproduzierbare Längspositionierung des Werkstücks sollte die Werkstückauflage im Bereich der Schwenkachse einen Endanschlag aufweisen, der im Fall, daß eine Auflageebene verstellbar ist, an diese Auflageebene angebracht werden sollte. Der Endanschlag kann mit einer Klemmeinrichtung für die Fixierung der Anschlagposition des Werkstücks kombiniert sein, wofür es ein in ein Werkstück einfahrbares Widerlager aufweisen sollte.

Nach einem weiteren Merkmal der Erfindung ist vorgesehen, daß die Werkstückauflage mit einem Winkelanschlag versehen ist, der in der Längsachse der Werkstückauflage beweglich ist und bei dem die Winkelstellung der Anschlagebene zu dieser Längsachse verstellbar ist. Auch dies erleichtert eine besonders präzise und reproduzierbare Herstellung von Werkstücken mit insbesondere schrägen Abschlüssen. Die Anschlagebenen des Winkelanschlags sollten vorzugsweise an einer sich parallel zur Längsachse der Werkstückauflage erstreckenden Skalierung heranreichen, wodurch die Einstellung des Winkelanschlags erleichtert wird. Aufgrund der erfindungsgemäßen Anordnung der Schwenkachse in einer Tangentialebene des Rohrabschnitts wird eine Skalierung des Abschnitts zwischen dem Schnittpunkt der kürzesten oder längsten Mantellinie mit der Schnittebene der Säge und dem Winkelanschlag möglich.

In der Zeichnung ist die Erfindung anhand eines Ausführungsbeispiels näher veranschaulicht. Es zeigen:
- Figur 1: die Frontansicht einer erfindungsgemäßen Sägemaschine;
- Figur 2: eine Seitenansicht der Sägemaschine gemäß Figur 1 mit eingelegtem Rohr für einen 90̸°-Schnitt;
- Figur 3: eine Draufsicht auf die Sägemaschine gemäß den Figuren 1 und 2, jedoch mit schräggestellter Bandsäge;
- Figur 4: eine Draufsicht auf die Sägemaschine gemäß Figur 3 mit Winkelanschlag für die Herstellung von beidseitig angeschrägten Rohren und
- Figur 5: eine Draufsicht auf die Sägemaschine gemäß den Figuren 1 bis 4 mit in einem anderen Winkel schräggestellter Bandsäge für die Herstellung von gepfeilten Rohrenden.

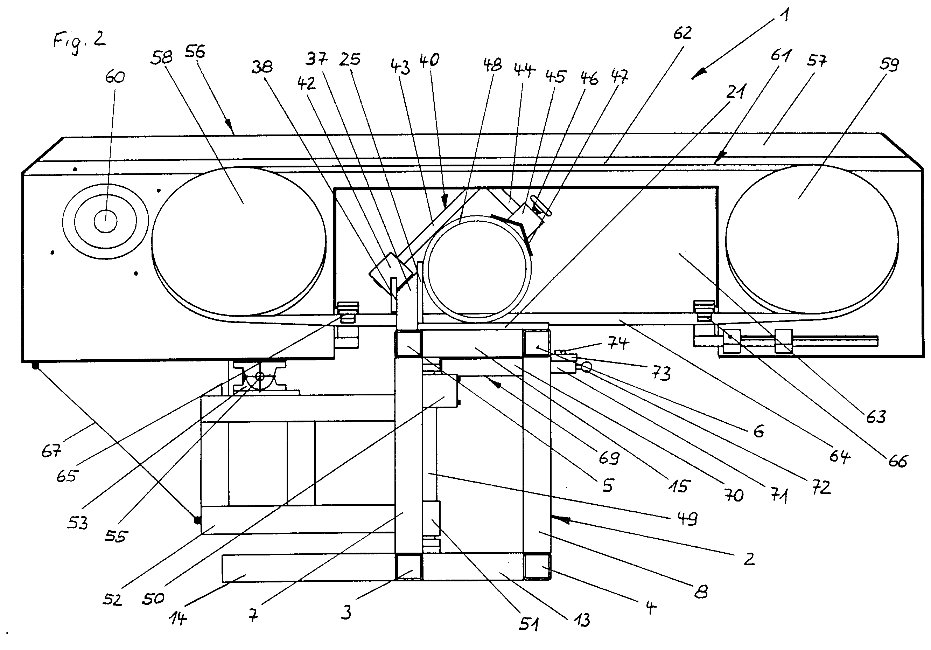

Die in den Figuren dargestellte Sägemaschine (1) hat ein Maschinengestell (2), das vier sich in Längsrichtung horizontal erstreckende Rahmenrohre (3, 4, 5, 6) hat, wobei sich zwei Rahmenrohre (3, 4) im Bereich des Bodens und zwei Rahmenrohre (5, 6) in einer weiteren Horizontalebene oberhalb davon erstrecken. Die oberen Rahmenrohre (5, 6) ruhen dabei auf Vertikalstützen (7, 8, 9, 10̸, 11, 12). Die unteren Rahmenrohre (5, 6) sind in den gleichen Abständen wie die Vertikalstützen (7, 8, 9, 10̸, 11, 11) über Querstreben (13) miteinander verbunden. Eine der Querstreben (13) setzt sich - wie aus Figur 2 zu ersehen ist - nach außen hin durch einen Ausleger (14) fort. Die oberen Rahmenrohre (5, 6) sind ebenfalls durch Querstreben (15, 16, 17, 18, 19, 20̸) miteinander verbunden. Auf diese Weise entsteht ein stabiles Maschinengestell (2).

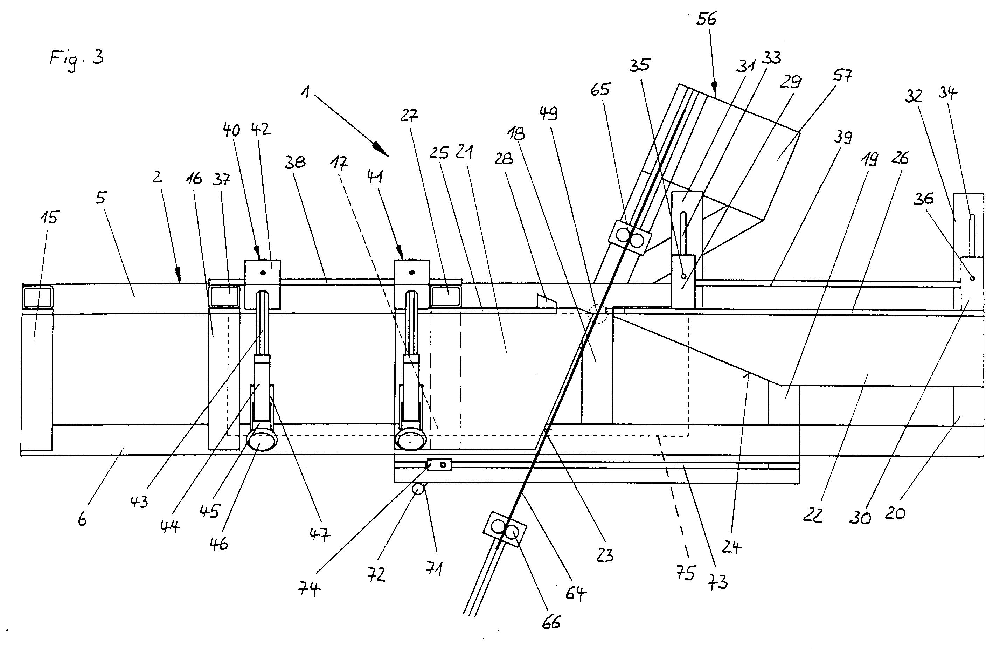

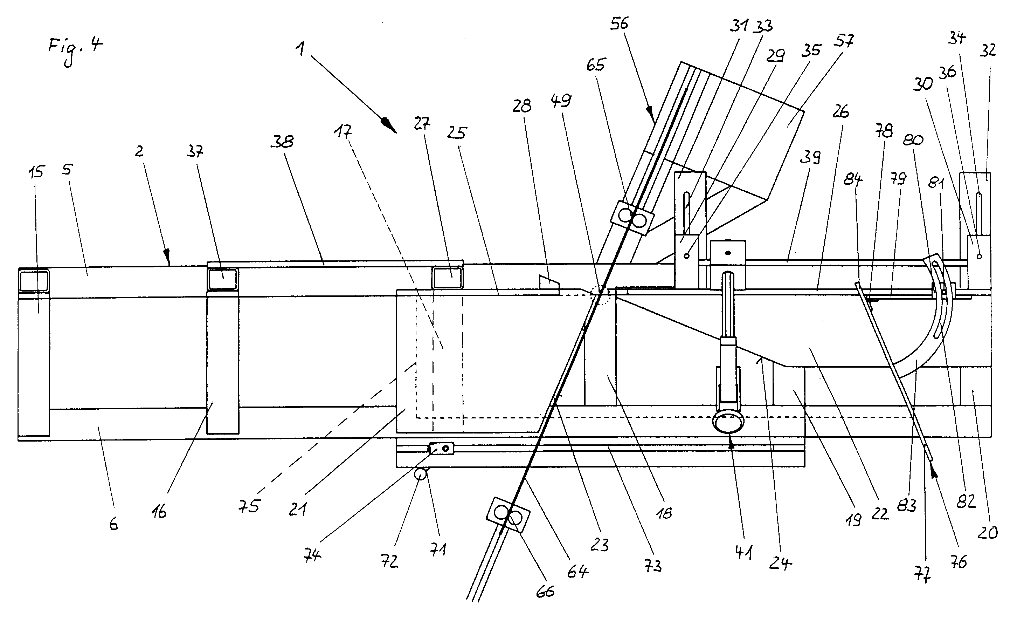

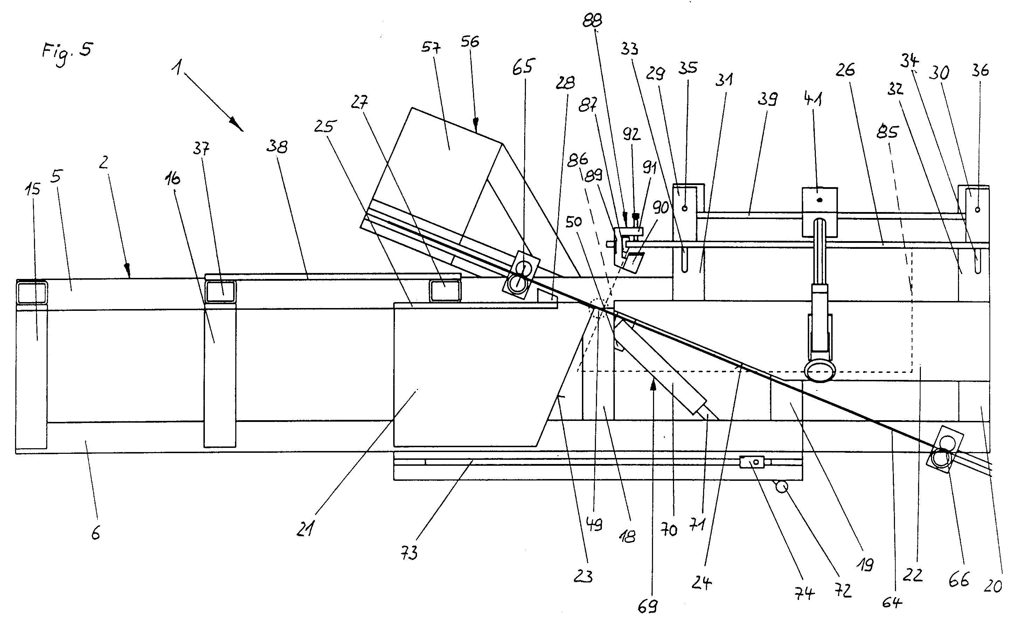

Auf der Oberseite der oberen Rahmenrohre (5, 6) sind in gleicher Ebene zwei horizontale Auflageplatten (21, 22) angebracht. Sie haben zwei sich gegenüberliegende schräge Stirnkanten (23, 24), welche einen freigelassenen Winkelbereich einschließen. Senkrecht dazu erstrecken sich auf einer Seite der Auflageplatten (21, 22) vertikale Anlageplatten (25, 26). Die in den Figuren 3 bis 6 linksseitige Anlageplatte (25) ist an zwei Vertikalstützen (27, 28) ortsfest gehalten. Die andere Anlageplatte (26) ist außenseitig an zwei im Abstand zueinander angeordneten Schiebeblöcken (29, 30̸) befestigt, welche auf senkrecht zu dem Rahmenrohr (5) sich nach außen erstreckenden, an diesem befestigten Verstellausleger (31, 32) verschieblich ruhen. Die Verstellausleger (31, 32) haben senkrecht zu dem Rahmenrohr (5) sich erstreckende Verstellschlitze (33, 34), in die nach unten vorstehende Führungsbolzen (35, 36) der Schiebeblöcke (29, 30̸) einfassen. Auf diese Weise ist die Anlageplatte (26) quer zur Längserstreckung der Sägemaschine (1) verschieblich, wie die unterschiedlichen Stellungen der Anlageplatte (26) in den Figuren 3 und 4 einerseits und den Figur 5 andererseits zeigen.

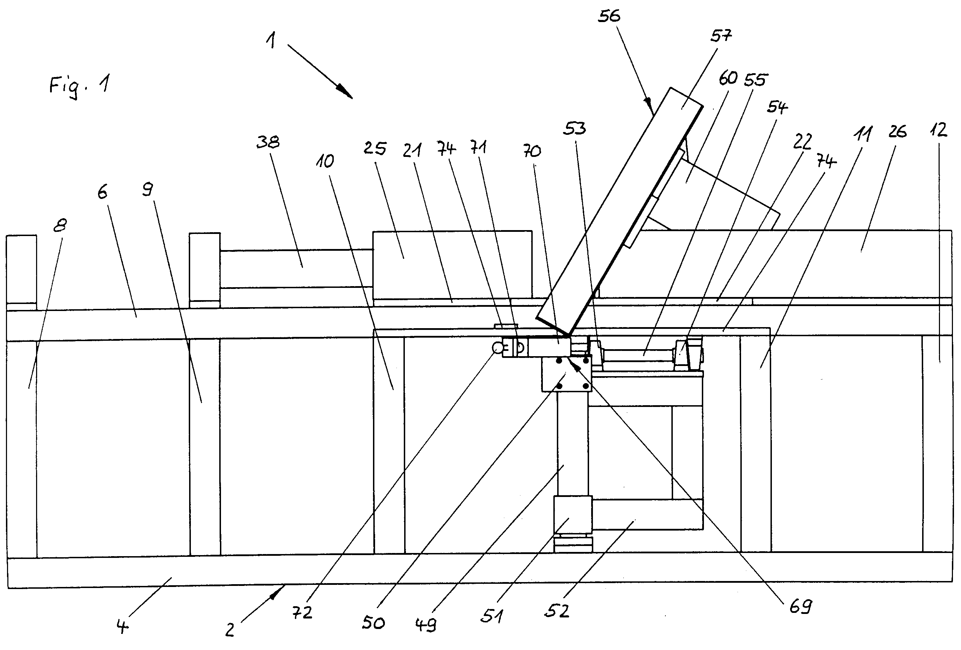

An der Außenseite der Vertikalstütze (27) und einer weiteren Vertikalstütze (37) sowie zwischen den beiden Schiebeblöcken (29, 30̸) sind zwei vertikale Führungsplatten (38, 39) angebracht, die sich parallel zu den Anlageplatten (25, 26) erstrecken. Auf diese können Spanneinrichtungen (40̸, 41) längsverstellbar aufgesetzt werden. Die Spanneinrichtung (40̸) hat einen mit einem Schlitz versehenen Aufsatzblock (42), mit der sie in den Figuren 1 und 2 über die Führungsplatte (38) gestülpt ist. Von dem Aufsatzblock (42) geht eine Grobverstellstange (43) aus, welche in ihrer Längsachse verstellbar in dem Aufsatzblock (42) gelagert ist. Sie ragt im Winkel von 45° über die Oberseite des Maschinengestells (2). An ihrem oberen Ende ist ein senkrecht dazu verlaufender Klemmarm (44) angebracht, an dessen freiem Ende ein Klemmblock (45) befestigt ist. Diesen durchdringt eine Spindel (46), an deren in Richtung auf das Maschinengestell (2) gerichteten Ende ein Klemmwinkel (47) angebracht ist. Der Klemmwinkel (47) kann mit Hilfe der Spindel (46) parallel zur Grobverstellstange (43) bewegt werden. Mit Hilfe der Spanneinrichtung (41) läßt sich ein Rohr (48) - wie aus Figur 2 zu ersehen - fest gegen die Auflageplatte (21) und Anlageplatte (25) pressen und lagefixieren.

Die Spanneinrichtung (42) ist mit der Spanneinrichtung (41) identisch, so daß auf die vorstehende Beschreibung Bezug genommen werden kann.

Zwischen dem unteren Rahmenrohr (3) und dem oberen Rahmenrohr (5) erstreckt sich eine Lagerachse (49), welche von zwei Lagerhülsen (50̸, 51) oben- und untenseitig umfaßt wird. An den Lagerhülsen (50̸, 51) schließt sich ein nach außen vorspringendes Lagergestell (52) an, welches um die Lagerachse (49) drehbar ist. Auf der Oberseite des Lagergestells (52) ist in zwei Lagerböcken ken (53, 54) eine Horizontalschwenkachse (55) gelagert. Die Horizontalschwenkachse (55) erstreckt sich parallel zu den Rahmenrohren (3, 4, 5, 6).

An der Horizontalschwenkachse (55) ist eine Bandsäge (56) angebracht. Sie erstreckt sich im wesentlichen quer zur Längserstreckung des Maschinengestells (2) und hat einen Bandsägekasten (57), in dem gegenüberliegend zwei Umlenkrollen (58, 59) gelagert sind. Die in Figur 2 linksseitige Umlenkrolle (58) ist über einen Antriebsmotor (60̸) angetrieben, während die andere Umlenkrolle (59) frei drehbar ist.

Über die Umlenkrollen (58, 59) ist ein Sägeband (61) geführt. Dessen Obertrum (62) verläuft oberhalb eines Ausschnitts (63) des Bandsägekastens (57), während das Untertrum (64) den Ausschnitt (63) kreuzt. Im Bereich der vertikalen Begrenzungen des Ausschnitts (63) befinden sich Umlenkrolleneinrichtungen (65, 66), die das Sägeband (61) für den Bereich des Ausschnitts (63) so verdrehen, daß es in einer Vertikalebene läuft, also senkrecht steht.

Die gesamte Bandsäge (56) kann um die Horizontalschwenkachse (55) verschwenkt werden, wobei das Untertrum (64) des Sägebands (61) eine vertikale Schnittebene definiert. Über diese Schwenkbewegung kann das Rohr (48) in einer Vertikalebene durchgesägt werden. In der in Figur 2 dargestellten Endstellung wird die Bandsäge (56) durch ein Anschlagelement im Bereich der Lagerböcke (53, 54) abgestützt, während es in der hochgeschwenkten Ruheposition durch ein Feder-Dämpfer-Element (67) gehalten ist.

Das Lagergestell (62) und damit die Bandsäge (56) können um die Lagerachse (49) in dem zwischen den Stirnkanten (23, 24) der Auflageplatten (21, 22) freigelassenen Bereich für das Untertrum (64) des Sägebands (61) verschwenkt werden. Hierzu ist an der oberen Lagerhülse (50̸) ein Betätigungsarm (69) befestigt, welcher aus zwei Teleskopstücken (70̸, 71) zusammengesetzt ist und dessen freies Ende in einem Betätigungsknopf (72) endet. Am oberen Rahmenrohr (6) ist eine parallel zu dessen Längsachse verlaufende Kulissenführung (73) angebracht, in der ein Teleskopstück (71) schwenkbar angebrachtes Kulissenstück (74) geführt ist. Über den Betätigungsknopf (72) kann die Verschwenkung des Lagergestells (52) und damit der Bandsäge (56) bewirkt werden, wobei auch eine Fixierung des Kulissenstücks (74) in der Kulissenführung (73) möglich ist.

In den Figuren 3 bis 5 ist der obere Teil der Bandsage (56) bzw. des Bandsägekastens (57) weggelassen, um den jeweiligen Verlauf des Untertrums (64) des Sägebands (61) in der Draufsicht erkennbar zu machen. In den Figuren 1 und 2 läuft das Sägeband (61) senkrecht zur Längserstreckung des Maschinengestells (2), so daß das Rohr (48) beim Durchsägen einen vertikalen Abschluß erhält. In Figur 3 ist die Bandsäge (56) durch Verschwenken um die Lagerachse (49) in eine solche Stellung gebracht worden, daß das Untertrum (64) des Sägebands (61) parallel zu der Stirnkante (23) der Auflageplatte (21) verläuft. Die Anordnung der Lagerachse (49) ist dabei so getroffen, daß die Verschwenkung um eine Achse erfolgt, die in der Ebene der Anlageplatte (25) liegt und jeweils durch den gestrichelten Kreis angedeutet wird.

In den Figuren 3 und 4 liegt die rechtsseitige Anlageplatte (26) in derselben Ebene wie die linksseitige Anlageplatte (25). Gestrichelt dargestellt ist ein Rohr (75), das mittels der Spanneinrichtungen (41, 42) fixiert ist und dessen rechtes Ende in einem Winkel von 22,5° zum Querschnitt des Rohres (75) abgesägt wird. Figur 4 zeigt die Situation nach Umsetzen des Rohres (75). Das abgesägte Ende des Rohres (75) ist zur Anlage an einem Winkelanschlag (76) derart gebracht worden, daß die gesamte Stirnkante des Rohres (75) an dem Winkelanschlag (76) anliegt. Hierzu hat der winkelanschlag (76) eine Anschlagplatte (77), die mittels eines Beschlags (78) an einer Führungsplatte (79) angelenkt ist. Die Führungsplatte (79) liegt an der Anlageplatte (26) an. An ihrer Oberseite ist ein Führungsblock (80̸) befestigt, der über die Oberseite der Anlageplatte (26) führend gestülpt ist und mit einem hochstehenden Bolzen (81) in einen bogenförmigen Führungsschlitz (82) einfaßt. Der Führungsschlitz (82) gehört zu einem bogenförmigen Verstellblech (83), das an der Rückseite der Anschlagplatte (77) befestigt ist. Der Führungsschlitz (82) ist von einer hier nicht näher dargestellten Winkelskalierung begleitet, so daß sich der Winkel der Anschlagkante (77) zu der Anlageplatte (26) reproduzierbar einstellen und auch fixieren läßt. In diesem Fall ist er auf den schon erwähnten Winkel von 22,5° zur Senkrechten auf die Anlageplatte (26) eingestellt.

Die Anschlagplatte (77) hat einen über die Anlageplatte (26) reichenden Fortsatz (84). Dies macht ein genaues Ablesen einer hier ebenfalls nicht dargestellten Längenskalierung auf der Oberseite der Anlageplatte (26) möglich. Der Nullpunkt der Längenskalierung ist der Drehpunkt der Lagerachse (49). Da die Winkelstellung des Lagergestells (52) und damit der Bandsäge (56) gegenüber der Situation gemäß Figur 3 nicht verändert ist, wird durch Verschwenken der Bandsäge (56) um die Horizontalschwenkachse (55) ein Verkürzen des Rohres (65) bewirkt, und zwar ebenfalls in einem Winkel von 22,5°. Es entsteht also ein symmetrisch abgeschrägtes Rohr (75) mit einer genau definierten, an der Längenskalierung auf der Anlageplatte (26) ablesbaren kürzesten Mantellinie. Dabei ist das Rohr (75) durch die auf die Führungsplatte (40̸) umgesetzte Spanneinrichtung (42) fixiert.

In Figur 5 sind das Lagergestell (52) und die Bandsäge (56) durch Verschieben des Betätigungsknopfs (52) nach rechts in die andere Extremstellung verschwenkt, bei der das Untertrum (64) des Sägebands (61) parallel zu der Stirnkante (24) der Auflageplatte (22) verläuft. Auf diese Auflageplatte (26) ist ein Rohr (85) aufgelegt, das eine zuvor gemäß der Beschreibung zu Figur 3 abgeschrägte Stirnseite (86) hat. Damit dieses Rohr (85) im Bereich dieser Stirnseite (86) für die Herstellung einer Rohrabzweigung verwendet werden kann, soll die Stirnseite (86) pfeilförmig gestaltet werden, und zwar in der Weise, daß eine zweite Stirnseitenebene gesägt wird, die die Ebene der Stirnseite (86) in der Mittelachse des Rohres (85) schneidet.

Um diesen Punkt genau zu treffen, ist die Anlageplatte (26) nach außen verschoben worden, und zwar entsprechend dem Durchmesser des Rohres (85), so daß sich der vertikale Rohrdurchmesser der Schnittebene in dieser Ebene erstreckt. Hierzu können die Verstellausleger (31, 32) entsprechende Längenskalierungen begleiten, die eine genaue Einstellung nach Rohrdurchmesser zulassen.

Am Ende der Anlageplatte (26) ist ein Rohranschlag (87) vorgesehen. Er hat eine solche Anordnung, daß das Rohr (85) bei bestimmungsgemäßer Quereinstellung der Anlageplatte (26) mit seiner Stirnseite (86) genau richtig zur Auflageebene (21, 22) liegt.

Dem Rohranschlag (87) zugeordnet ist eine Klemmeinrichtung (88), welche einen U-Winkel (89) hat. Ein erster U-Schenkel (90̸) ist dazu bestimmt, in das Rohr (85) einzufassen und an dessen Innenseite anzuliegen. Der zweite U-Schenkel (91) umfaßt die Anlageplatte (26) von außen und hat dort eine Spannschraube (92). Auf diese Weise kann das Ende des Rohres (85) zusätzlich zu der Spanneinrichtung (42) mit der Anlageplatte (26) verspannt werden. Durch Verschwenken der Bandsäge (56) um die Horizontalschwenkachse (55) erhält die Stirnseite (86) eine pfeilförmige Gestalt.

## Patentansprüche

1. Sägemaschine zum Sägen von Werkstücken, insbesondere von Kunststoffrohren, mit einem Maschinengestell, das eine Werkstückauflage hat, und einer Bandsäge, die eine Schnittebene definiert und am Maschinengestell um eine Schwenkachse drehbar gelagert ist, wobei die Schwenkachse derart orientiert ist, daß durch Verschwenken der Bandsäge der Winkel der Schnittebene zur Längsachse der Werkstückauflage einstellbar ist,
dadurch gekennzeichnet, daß sich die Schwenkachse (49) in der Schnittebene erstreckt und daß Werkstückauflage (21, 22, 25, 26) und Schwenkachse (49) derart zueinander angeordnet oder wenigstens teilweise ausrichtbar sind, daß die Schwenkachse (49) eine seitliche Begrenzung des in der Werkstückauflage (21, 22, 25, 26) befindlichen Werkstücks (48, 75, 85) tangiert.

2. Sägemaschine nach Anspruch 1,
dadurch gekennzeichnet, daß die Werkstückauflage zwei im Winkel zueinander stehende Auflageebenen (21, 22, 25, 26) hat.

3. Sägemaschine nach Anspruch 2,
dadurch gekennzeichnet, daß die Auflageebenen (21, 22, 25, 26) im rechten Winkel zueinander stehen.

4. Sägemaschine nach Anspruch 3,
dadurch gekennzeichnet, daß die Werkstückauflage eine horizontale Auflageebene (21, 22) und eine vertikale Auflageebene (25, 26) aufweist.

5. Sägemaschine nach einem der Ansprüche 1 bis 4,
dadurch gekennzeichnet, daß die Schwenkachse (49) vertikal orientiert ist

6. Sägemaschine nach einem der Ansprüche 1 bis 5,
dadurch gekennzeichnet, daß die Werkstückauflage längsverstellbar ausgebildet ist.

7. Sägemaschine nach einem der Ansprüche 1 bis 6,
dadurch gekennzeichnet, daß die Werkstückauflage quer zur Schnittebene verstellbar ist.

8. Sägemaschine nach einem der Ansprüche 3 bis 5,
dadurch gekennzeichnet, daß eine der Auflageebenen (26) quer zur Schnittebene verstellbar ist.

9. Sägemaschine nach Anspruch 8,
dadurch gekennzeichnet, daß die verstellbare Auflageebene (26) senkrecht zur Schwenkachse (49) beweglich geführt ist.

10. Sägemaschine nach Anspruch 4 sowie Anspruch 8 oder 9,
dadurch gekennzeichnet, daß die vertikale Auflageebene (26) verstellbar ist.

11. Sägemaschine nach einem der Ansprüche 1 bis 10̸,
dadurch gekennzeichnet, daß die Werkstückauflage (26) im Bereich der Schwenkachse (49) einen Endanschlag (87) aufweist.

12. Sägemaschine nach Anspruch 11 und einem der Ansprüche 8 bis 10̸,
dadurch gekennzeichnet, daß der Endanschlag (87) an der verstellbaren Auflageebene (26) angebracht ist.

13. Sägemaschine nach Anspruch 11 oder 12,
dadurch gekennzeichnet, daß der Endanschlag (87) mit einer Klemmeinrichtung (88) für die Fixierung der Anschlagposition des Werkstücks (85) kombiniert ist.

14. Sägemaschine nach Anspruch 13,
dadurch gekennzeichnet, daß die Klemmeinrichtung (88) einen in ein Werkstück (85) einfahrbares Widerlager (90̸) aufweist.

15. Sägemaschine nach einem der Ansprüche 1 bis 14,
dadurch gekennzeichnet, daß die Werkstückauflage (26) mit einem Winkelanschlag (76) versehen ist, der in der Längsachse der Werkstückauflage (21, 22, 25, 26) beweglich ist und bei dem die Winkelstellung seiner Anschlagebene (77) zu dieser Längsachse verstellbar ist.

16. Sägemaschine nach Anspruch 15,
dadurch gekennzeichnet, daß die Anschlagebene (77) des Winkelanschlags (76) bis an einer sich parallel zur Längsachse der Werkstückauflage (21, 22, 25, 26) erstreckenden Skalierung heranreicht.
